# EUROPÄISCHE PATENTSCHRIFT

(11) **EP 0 921 679 B1**
(45) Veröffentlichungstag und Bekanntmachung des Hinweises auf die Patenterteilung: **25.04.2007**
(21) Anmeldenummer: 98122957.8
(22) Anmeldetag: 03.12.1998
(51) Int. Cl.: H04N 5/44, H04N 5/445

(54) **Vorrichtung zur Erleichterung des Zugriffs auf im Internet übertragene Information**
Apparatus for facilitating access to information transmitted in the Internet
Appareil pour faciliter l'accès à des informations transmises dans le réseau Internet

(30) Priorität: 06.12.1997 DE 19754269
(43) Veröffentlichungstag der Anmeldung: 09.06.1999
(73) Patentinhaber: Grundig Multimedia B.V., 1083HJ Amsterdam (NL)
(72) Erfinder: Fischbeck, Udo c/o GRUNDIG AG, 90762 Fürth (DE)
(74) Vertreter: Pröll, Jürgen

(56) Entgegenhaltungen:
- EP-A- 0 723 369
- EP-A- 0 810 579
- WO-A-97/28499
- WO-A-97/33434
- WO-A-97/41690

## Beschreibung

Die Erfindung betrifft eine Vorrichtung zur Erleichterung des Zugriffs auf im Internet übertragene Informationen, mit einem Fernsehempfänger und einer in das Gehäuse des Fernsehempfängers integrierten oder dem Fernsehempfänger beigestellten internetfähigen Zusatzeinheit, welche mit einem Fernsehempfänger kommuniziert.

Von der Anmelderin wurde während der Internationalen Funkausstellung 1997 in Berlin bereits ein als Webbox bezeichnetes internetfähiges Gerät vorgestellt, welches als Beistellgerät zu einem Fernsehempfänger vorgesehen ist. Diese Webbox weist eine Bedientastatur auf, mittels der Daten eingebbar sind, die Internetadressen entsprechen. Nach erfolgtem Verbindungsaufbau mit dem Internet und dem Auffinden der durch die eingegebene Internetadresse spezifizierten Internetseite erfolgt eine Darstellung dieser Seite auf dem Bildschirm des Fernsehempfängers.

Ausgehend von diesem Stand der Technik liegt der Erfindung die Aufgabe zugrunde, eine Vorrichtung mit den im Oberbegriff des Anspruchs 1 angegebenen Merkmalen derart weiterzubilden, daß der Zugriff auf das Internet für den Benutzer erleichtert ist.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Patentansprüchen.

Aus WO 97/41690 ist ein TV-Gerät mit einem URL-Empfang für Internetadressen offenbart.

Aus WO 97/33434 ist ein System zur Präsentation eines Videoprogramms und zugehörender Internetinformationen offenbart, wobei das System eine Einrichtung für den Empfang eines Programms, das ein Videosignal, ein Audiosignal und einen oder mehrere integrierte vereinheitlichte Quellangaben enthält, bekannt.

Die Vorteile der Erfindung bestehen insbesondere darin, daß der Benutzer die einzelnen alphanumerischen Zeichen von Internetadressen nicht mehr manuell mittels einer Bedieneinheit eingeben muß, da die den Internetadressen entsprechenden Daten aus einem übertragenen Fernsehsignal abgetrennt und in einem Speicher abgespeichert werden. Die abgespeicherten Daten, die einer oder mehreren Internetadressen entsprechen, stehen dann für einen späteren Verbindungsaufbau mit dem Internet zur Verfügung.

Mittels der im Anspruch 2 angegebenen Merkmale können aus den übertragenen Fernsehsignalen Internetadressdaten separiert werden, die im sichtbaren Bildbereich des Fernsehsignals übertragen werden.

Die Merkmale des Ansprüche 3 und 4 erlauben eine Abtrennung von Internetadressdaten, welche in den Austastlücken des Fernsehsignals übertragen werden.

Durch die Merkmale des Anspruchs 6 erhält der Benutzer eine anschauliche Übersicht über bereits abgespeicherte Internetadressen.

Die mit den Merkmalen des Anspruchs 7 erreichbaren Vorteile bestehen darin, daß der Benutzer die Möglichkeit hat, eine Entscheidung dahingehend zu treffen, zu welchem Zeitpunkt Internetadressdaten abgespeichert werden sollen. Er hat dadurch insbesondere die Möglichkeit, einzelne Internetadressdaten, die im Fernsehsignal übertragen werden, nicht abzuspeichern, wenn ihn die zugehörigen Themengebiete nicht interessieren.

Die Vorteile der Merkmale des Anspruchs 8 bestehen darin, daß der Benutzer direkt aus der auf dem Bildschirm dargestellten Tabelle heraus eine Internetadresse anwählen kann, wodurch der Aufbau einer Verbindung zum Internet in die Wege geleitet wird.

Mit den Merkmalen des Anspruchs 9 wird erreicht, daß eine Abspeicherung von Internetadressen entsprechenden Daten automatisch immer dann erfolgt, wenn der Tuner des Fernsehempfängers auf einen gewünschten Fernsehkanal abgestimmt ist. Eine Abspeicherung derartiger Daten erfolgt in diesem Fall selbstverständlich nur dann, wenn eine Überprüfung durch die Steuereinheit der Vorrichtung ergibt, daß die aus dem Fernsehsignal separierten Internetadressdaten nicht bereits im Speicher enthalten sind.

Weiterhin kann diese automatische Abspeicherung von Internetadressdaten zunächst in einem Pufferspeicher erfolgen, so daß der Benutzer zu einem gewünschten Zeitpunkt die Möglichkeit hat, die im Pufferspeicher abgespeicherten Internetadressdaten entweder zu verwerfen oder in den im Anspruch 1 genannten Speicher zu übernehmen, bei dem es sich um einen nichtflüchtigen Speicher handelt.

Die Merkmale des Anspruchs 9 bieten dem Benutzer die Möglichkeit, zusätzlich zu den aus dem Fernsehsignal abgeleiteten Internetadressen weitere Internetadressen manuell einzugeben. Dadurch wird dem Umstand Rechnung getragen, daß es eine Vielzahl von Internetadressen gibt, die nicht zusammen mit einem Fernsehsignal übertragen werden.

Mittels der im Anspruch 10 angegebenen Merkmale wird erreicht, daß der Benutzer die Möglichkeit hat, die in der Tabelle enthaltenen Internetadressen nach seinen eigenen Wünschen umzusortieren und auch einzelne Internetadressen, die er nicht mehr benötigt, aus der Tabelle zu löschen. Dadurch wird die Tabelle für den Benutzer übersichtlicher und überschaubarer.

Weitere vorteilhafte Eigenschaften der Erfindung ergeben sich aus der Erläuterung eines Ausführungsbeispiels anhand der Figuren.
- FIG 1: zeigt die wesentlichen Bauteile der Vorrichtung,

- FIG 2: zeigt die wesentlichen Baugruppen zur Internetadressenermittlung aus einem Fernsehbild und
- FIG 3: zeigt ein Ablaufschema der Vorgehensweise zur Erkennung der Internetadresse aus einem Fernsehbild.

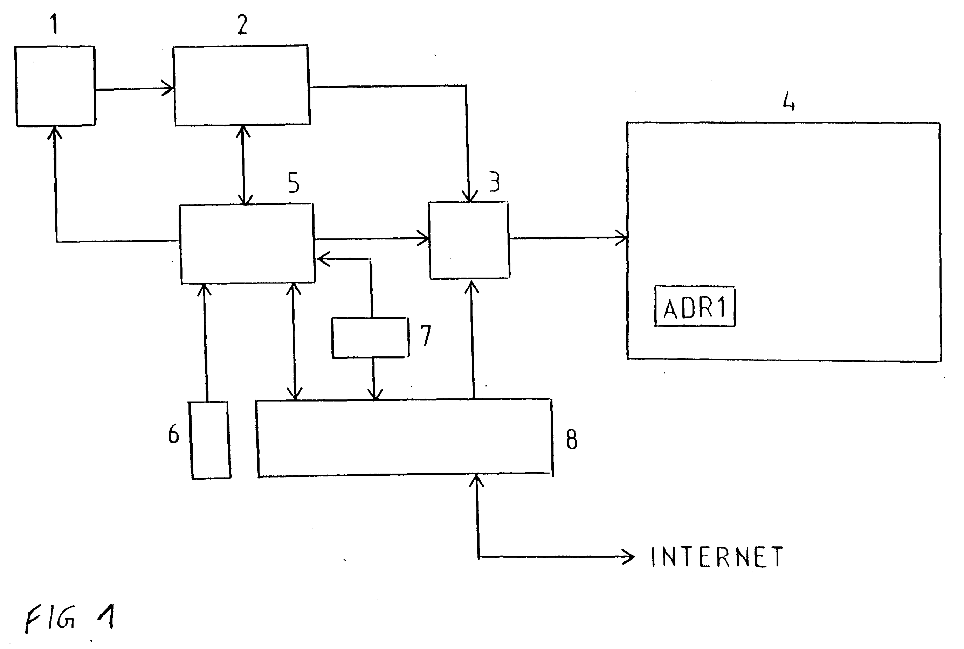

FIG 1 zeigt die zum Verständnis der Erfindung wesentlichen Bauteile eines Fernsehempfängers. Diese Bauteile sind ein Tuner 1, eine Bildsignalverarbeitungsschaltung 2, die einen Bildspeicher aufweisen kann, ein Schalter 3, ein Bildschirm 4, ein Mikrocomputer 5, eine Bedieneinheit 6, bei der es sich vorzugsweise um einen Fernbedienungsgeber und einen Fernbedienungsempfänger handelt, ein Speicher 7 und eine internetfähige Zusatzeinheit 8. Diese internetfähige Zusatzeinheit 8 kann entweder in das Gehäuse des Fernsehempfängers integriert oder als Beistellgerät zu dem Fernsehempfänger realisiert sein, welches mit dem Fernsehempfänger kommuniziert.

Der dargestellte Fernsehempfänger arbeitet wie folgt:
Mittels der Bedienheinheit 6 wird ein Kanalwahlbefehl eingegeben. Dieser Kanalwahlbefehl wird dem Mikrocomputer 5 zugeführt, der daraufhin dem Tuner 1 ein Steuersignal zuführt, aufgrund dessen der Tuner auf den gewünschten Fernsehkanal abgestimmt wird. Weiterhin steuert der Mikrocomputer 5 den Schalter 3 derart an, daß dieser in eine Schaltstellung gebracht wird, in welcher der Schalter für das Ausgangssignal der Bildverarbeitungsschaltung 2 durchlässig ist. Folglich werden vom Tunerausgang abgeleitete und in der Bildsignalverarbeitungsschaltung 2 verarbeitete Fernsehsignale über den Schalter 3 dem Bildschirm 4 zugeführt und dort dargestellt.

Diese Fernsehsignale weisen bereits senderseitig eingesetzte Internetadressdaten auf. Diese Internetadressdaten werden im aktiven Bildintervall übertragen und demzufolge - wie es in der Figur dargestellt ist - zusammen mit dem in der Figur nicht gezeigten Fernsehbild auf dem Bildschirm angezeigt. Beispielsweise kann während der ARD-Fernsehsendung "Tagesschau" zusätzlich zum Nachrichtensprecher auf dem Bildschirm als Internetadresse der Tagesschau der Schriftzug
hptt://www.tagesschau.de
angezeigt werden. Durch diese Anzeige soll dem Benutzer die Möglichkeit gegeben werden, diese Internetadresse zu notieren, um zu einem späteren Zeitpunkt mittels eines internetfähigen Gerätes im Internet übertragene Tagesschau-Seiten abrufen zu können.

Gemäß der Erfindung wird nun das Fernsehsignal, in welchem die genannten Internetadressdaten enthalten sind, einem Decoder zur Auswertung des Fernsehsignals und zum Abtrennen der Internetadressdaten aus dem Fernsehsignal zugeführt. Dieser Decoder ist im gezeigten Ausführungsbeispiel in den Mikrocomputer 5 integriert, welchem die Fernsehsignale von der Bildsignalverarbeitungsschaltung 2 zugeführt werden. Der Mikrocomputer 5 weist zur Auswertung des Signals Schrifterkennungsmittel auf. Eine Internetadresse wird beispielsweise an den Anfangsbuchstaben erkannt, die mit sehr hoher Wahrscheinlichkeit in eventuellen sonstigen Textbestandteilen des Fernsehsignals nicht enthalten sind. Erkennt der Mikrocomputer 5 derartige Internetadressdaten im Fernsehsignal, dann führt er diese dem Speicher 7 zu, um diese dort abzuspeichern. Dieser Auswerte- und Abspeichervorgang wird vorzugsweise durch einen vom Benutzer mittels der Bedieneinheit 6 eingegebenen Bedienbefehl ausgelöst. Weiterhin kann eine Internetsdresse anhand eines vom Benutzer definierten Kennwortes erkannt werden, nach welchem im Datemstrom gesucht wird.

Auf diese Weise können im Speicher 7 eine Vielzahl von Internetadressdaten abgespeichert werden, die sämtlich aus übertragenen Fernsehsignalen abgeleitet sind.

Alternativ oder zusätzlich zu dem vorstehend beschriebenen Ausführungsbeispiel können Internetadressdaten auch in den Austastlücken des Fernsehsignals, vorzugsweise im Videotextdatenstrom, übertragen und beispielsweise unter Verwendung eines Videotextdecoders decodiert und zur Abspeicherung im Speicher 7 zur Verfügung gestellt werden.

Der Mikrocomputer 5 ist nun weiterhin dazu vorgesehen, in Ansprache auf einen mittels der Bedieneinheit 6 eingegebenen Anzeigebefehl die im Speicher 7 abgespeicherten Internetadressdaten in Form einer Tabelle auf dem Bildschirm 4 anzuzeigen. Der Benutzer hat dann die Möglichkeit, unter Verwendung der Tastatur der Bedieneinheit 6 die angezeigte Tabelle umzusortieren und bei Bedarf einzelne Internetadressdaten aus der Tabelle zu löschen.

Weiterhin kann er unter Verwendung von Cursorsteuertasten der Bedieneinheit 6 in der Tabelle eine gewünschte Internetadresse anwählen, um eine Verbindung zum Internet aufzubauen. Diese Anwahl wird vom Mikrocomputer 5 erkannt und an die Steuerschaltung der internetfähigen Zusatzeinheit 8 gemeldet. Diese holt die genannten Internetadressdaten aus dem Speicher 7 und verwendet sie zum Aufbau einer Verbindung mit dem Internet.

Nachdem der Benutzer die gewünschte Internetadresse angewählt hat, steuert der Mikrocomputer 5 weiterhin den Schalter 3 in eine derartige Schaltstellung, daß dieser für Signale durchlässig wird, die von der internetfähigen Zusatzeinheit kommen.

Ist die Verbindung zum Internet aufgebaut, dann kann die durch die angewählte Adresse spezifizierte Internetseite über die Zusatzeinheit 8 und den Schalter 3 auf dem Bildschirm 4 des Fernsehempfängers dargestellt werden.

Nach alledem werden bei der Erfindung Internetadressen aus Fernsehsignalen separiert und abgespeichert. Die abgespeicherten Internetadressdaten können in Form einer Tabelle auf dem Bildschirm eines Fernsehempfängers dargestellt werden. Mittels der Bedieneinheit des Fernsehempfängers wird eine der in der Tabelle dargestellten Internetadressen angewählt und bestätigt. Diese Internetadresse wird dann zum automatischen Aufbau einer Verbindung zum Internet verwendet. Für den Benutzer entfällt nach alledem die Notwendigkeit, Internetadressen mühsam mittels einer Bedientastatur eingeben zu müssen.

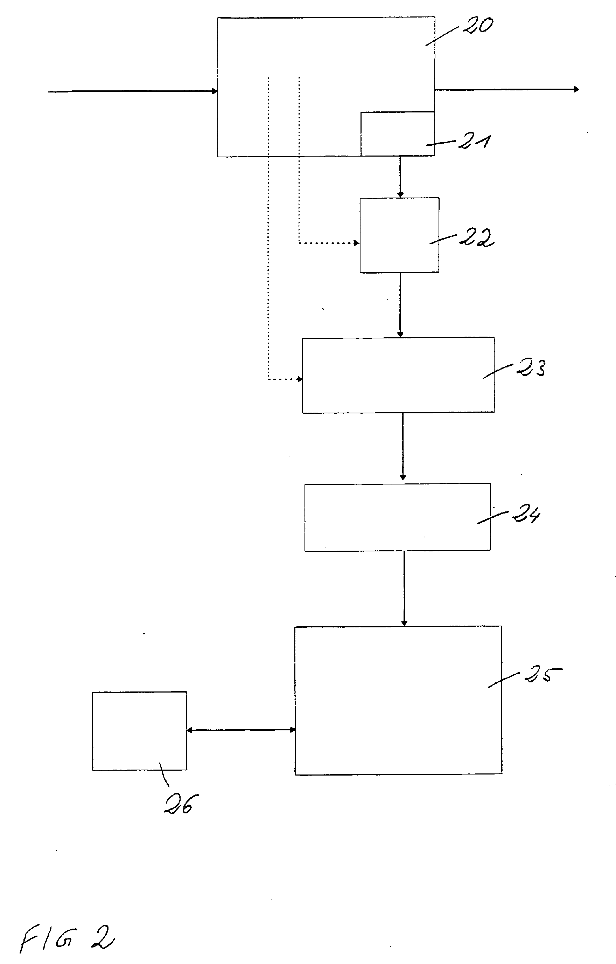

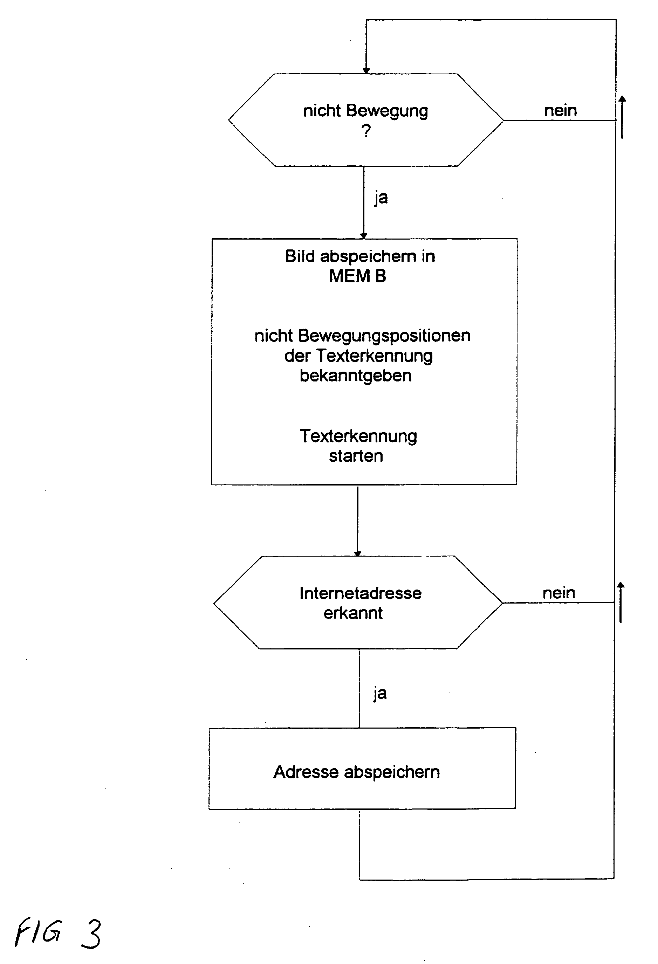

In FIG 2 sind die wesentlichen Baugruppen zur Internetadressenermittlung aus einem Fernsehbild dargestellt und aus FIG 3 ist eine Vorgehensweise zum Ermitteln der Internetadresse aus einem Fernsehbild exemplarisch aufgezeigt. Anhand dieser Figuren wird im weiteren die Funktionsweise der Internetadresserkennung aufgezeigt.
Die Vorrichtung weist einen Bildbewegungsdedektor 20, einen Speicher 21, einen Speicher 22, ein Texterkennungsmodul 23, eine Auswerteeinheit 24, einen Adressenspeicher 25 und einen Zugriff 26 auf.
Im Speicher 21 wird jeweils ein komplettes Fernsehübertragungsbild gespeichert. Der Bildbewegungsdedektor 20 erfaßt aus dem Vergleich der nachfolgenden Fernsehübertragungsbilder und dem im Speicher 21 abgelegten Fernsehübertragungsbild des eingehenden Videosignal die Bereiche des Fernsehbildes mit Nichtbewegung. Diese Bereiche speichert die Vorrichtung in dem Speicher 22, sowie die Positionen der Nichtbewegungsbereiche. Diese Positionen werden vom Bildbewegungsdedektor 20 ermittelt. Die Vorrichtung überprüft anschließend die Nichtbewegungsbereiche anhand der Größe der Bereiche auf Plausibilität des Vorliegens einer Internetadresse. Hierzu wird zugrundegelegt, daß die Darstellung einer Internetadresse für den Nutzer in erkennbarer Größe auf dem Bildschirm 4 dargestellt sein muß. Es hat sich ergeben, daß eine Darstellung der Zeichen der Internetadresse mindestens 6 Pixel breit und 9 Pixel hoch sein sollte, damit die Adresse lesbar ist. Im weiteren muß die Adresse mindestens 8 Zeichen lang sein, nämlich aus vier Zeichen für **"WWW.",** zwei Zeichen für die nachfolgende Adresse, z.B. **"X."** und letztlich zwei Zeichen für die Länderkennung, z.B. **"DE",** soweit diese in der momentan üblichen Schreibweise dargestellt ist. Folglich muß der Nichtbewegungsbereich eine Größe von mindestens 9 Pixel Höhe und 48 Pixel Breite aufweisen. Liegen Nichtbewegungsbereiche im Speicher 22 mit diesen Bedingungen vor, so aktiviert die Vorrichtung eine Texterkennung im Texterkennungsmodul 23 über diese Bereiche. Das Ergebnis dieser Texterkennung wird anschließend auf Plausibilität in der Auswerteeinheit 24 geprüft, d.h. ob eine Internetadresse vorliegen kann, anhand der Kennung **"http://"** bzw. **"WWW.".** Ist dies der Fall, so überträgt die Vorrichtung die ermittelte Internetadresse in den Adressenspeicher 25, überprüft ob diese Adresse bereits im Adressenspeicher 25 vorhanden ist und speichert diese ggf. dort ab. Der Nutzer kann den Adressenspeicher 25 nach Belieben sortieren, Adressen löschen und/oder neue Adressen eintragen. Über der Zugriff 26 können die Adressen ausgelesen und der Vorrichtung zugeführt werden, um die gewünschte Internetadresse anzuwählen.

In einer weiteren vorteilhaften Ausgestaltung der Erfindung werden die Bereiche mit Nichtbewegung zusätzlich zeitlich erfaßt, d.h. es wird zusätzlich die Dauer der Anzeige der Bereiche mit Nichtbewegung ermittelt. Nach allgemeiner Erfahrung muß eine Internetadresse mindestens 10 Sekunden auf dem Bildschirm dargestellt werden, damit diese von einem Nutzer wahrgenommen wird und diesem die zeit verbleibt sich die Adresse zu merken, bzw. zu notieren. Ändert sich ein Bereich mit Nichtbewegung schneller als dieser Zeit, so handelt es sich wahrscheinlich nicht um eine eingeblendete Adresse und dieser Bereich wird bei der Plausibilitätsüberprüfung verworfen.

## Patentansprüche

1. Vorrichtung zur Erleichterung des Zugriffs auf im Internet übertragene Informationen, mit einem Fernsehempfänger und einer in das Gehäuse des Fernsehempfängers integrierten oder dem Fernsehempfänger beigestellten internetfähigen Zusatzeinheit, wobei die Vorrichtung weiterhin einen Decodierer, der zur Decodierung von in einem Fernsehsignal übertragenen, Internetadressen entsprechenden Daten vorgesehen ist, und einen Speicher zur Abspeicherung der decodierten Daten aufweist,
**dadurch gekennzeichnet, dass**
- der Decodierer Schrifterkennungsmittel zur Auswertung von im Fernsehsignal übertragenen Daten aufweist und/oder
- ein Bildbewegungsdedektor (20) aus dem Fernsehübertragungsbild die Bereiche mit Nichtbewegung im Fernsehübertragungsbild ermittelt und diese Bereiche in einem Speicher (22) ablegt, wobei die Vorrichtung über diese Bereiche eine Texterkennung durchführt, das Ergebnis der Texterkennung auf Plausibilität prüft und im Falle des Erkennens einer Internetadresse diese speichert.

2. Vorrichtung nach Anspruch 1,
**dadurch gekennzeichnet, dass**
der Decodierer zur Decodierung von in den Austastlücken des Fernsehsignals übertragenen Daten vorgesehen ist.

3. Vorrichtung nach Anspruch 2,
**dadurch gekennzeichnet, dass**
der Decodierer ein Videotextdecoder ist.

4. Vorrichtung nach einem der vorhergehenden Ansprüche,
**dadurch gekennzeichnet, dass**
die Fernbedienungseinheit zur Löschung einzelner Internetadressen aus der Tabelle und/oder zur Umsortierung einzelner Internetadressen in der Tabelle vorgesehen ist.

5. Vorrichtung nach einem der vorhergehenden Ansprüche,
**dadurch gekennzeichnet, dass**
die Vorrichtung eine Steuereinheit aufweist, die den Speicher derart adressiert, dass auf dem Bildschirm des Fernsehempfängers eine Tabelle angezeigt wird, die Internetadressen enthält.

6. Vorrichtung nach einem der vorhergehenden Ansprüche,
**dadurch gekennzeichnet, dass**
die Vorrichtung eine Fernbedienungseinheit aufweist, mittels der die Abspeicherung von einer Internetadresse entsprechenden Daten auslösbar ist.

7. Vorrichtung nach einem der vorhergehenden Ansprüche,
**dadurch gekennzeichnet, dass**
die Vorrichtung eine Fernbedienungseinheit aufweist, mittels der eine in der Tabelle angezeigte Internetadresse anwählbar ist, um Internetverbindungen aufzubauen.

8. Vorrichtung nach einem der vorhergehenden Ansprüche,
**dadurch gekennzeichnet, dass**
die Steuereinheit nach der Abstimmung des Tuners des Fernsehempfängers auf einen Fernsehkanal automatisch den Decodierer zur Decodierung der im Fernsehsignal übertragenen, Internetadressen entsprechenden Daten ansteuert und die Abspeicherung derartiger Daten im Speicher initiiert.

9. Vorrichtung nach einem der vorhergehenden Ansprüche,
**dadurch gekennzeichnet, dass**
der Speicher zur Abspeicherung weiterer Internetadressdaten vorgesehen ist, die mittels der Fernbedienungseinheit des Fernsehempfängers oder einer anderen Tastatur eingebbar sind.

10. Vorrichtung nach einem der vorhergehenden Ansprüche,
**dadurch gekennzeichnet, dass**
die Fernbedienungseinheit zur Löschung einzelner Internetadressen aus der Tabelle und/oder zur Umsortierung einzelner Internetadressen in der Tabelle vorgesehen ist.

## Claims

1. Device for facilitating access to items of information transmitted on the Internet, comprising a television receiver and an additional unit with Internet capability integrated in the television receiver cabinet or made available to the television receiver, wherein the device furthermore comprises a decoder that is provided for decoding data transmitted in a television signal and corresponding to Internet addresses and a memory for storing the decoded data,
**characterized in that**
- the decoder comprises character recognition means for evaluating data transmitted in the television signal and/or
- an image movement detector (20) finds, from the transmitted television image, the movement-free regions in the transmitted television image and stores said regions in a memory (22), wherein the device performs a text recognition across said regions, tests the result of the text recognition for plausibility and, in the event of the recognition of an Internet address, stores the latter.

2. Device according to Claim 1, **characterized in that** the decoder is provided for decoding data transmitted in the blanking intervals of the television signal.

3. Device according to Claim 2, **characterized in that** the decoder is a teletext decoder.

4. Device according to any one of the preceding claims, **characterized in that** the remote control unit is provided for erasing individual Internet addresses from the table and/or rearranging individual Internet addresses in the table.

5. Device according to any one of the preceding claims, **characterized in that** the device comprises a control unit that addresses the memory in such a way that a table containing Internet addresses is displayed on the viewing screen of the television receiver.

6. Device according to any one of the preceding claims, **characterized in that** the device comprises a remote control unit by means of which the storage of data corresponding to an Internet address can be initiated.

7. Device according to any one of the preceding claims, **characterized in that** the device has a remote control unit by means of which an Internet address displayed in the table can be dialled up in order to set up Internet connections.

8. Device according to any one of the preceding claims, **characterized in that**, after the tuning of the tuner of the television receiver to a television channel, the control unit automatically triggers the decoder to decode the data transmitted in the television signal and corresponding to Internet addresses and initiates the storage of such data in the memory.

9. Device according to any one of the preceding claims, **characterized in that** the memory is provided for storing further Internet address data that can be inputted by means of the remote control unit of the television receiver or another keyboard.

10. Device according to any one of the preceding claims, **characterized in that** the remote control unit is provided for erasing individual Internet addresses from the table and/or for rearranging individual Internet addresses in the table.

## Revendications

1. Dispositif pour faciliter l'accès à des informations transmises dans le réseau Internet, comportant un téléviseur et une unité supplémentaire compatible Internet intégrée dans le boîtier du téléviseur ou associée ou téléviseur, dans lequel le dispositif présente en outre un décodeur, qui est prévu pour le décodage de données transmises dans un signal de télévision et correspondantes aux adresses Internet, et une mémoire pour la mémorisation des données décodées,
**caractérisé en ce que**
- le décodeur présente un moyen de reconnaissance d'écriture pour l'évaluation des données transmises dans le signal de télévision et/ou
- un détecteur de mouvement d'image (20) détecte à partir de l'image de télédiffusion les zones sans mouvement dans l'image de télédiffusion et mémorise ces zones dans une mémoire (22), où le dispositif effectue une reconnaissance de texte par l'intermédiaire de ces zones, vérifie le résultat de la reconnaissance de texte en ce qui concerne la plausibilité et dans le cas de la reconnaissance d'une adresse Internet mémorise celle-ci.

2. Dispositif selon la revendication 1, **caractérisé en ce que** le décodeur est prévu pour le décodage de données transmises pendant les intervalles de suppression du signal de télévision.

3. Dispositif selon la revendication 2, **caractérisé en ce que** le décodeur est un décodeur de vidéotexte.

4. Dispositif selon l'une des revendications précédentes, **caractérisé en ce que** l'unité de télécommande est prévue pour l'effacement de différentes adresses Internet depuis le tableau et/ou pour le recours aux différentes adresses Internet dans le tableau.

5. Dispositif selon l'une des revendications précédentes, **caractérisé en ce que** le dispositif présente une unité de commande, qui adresse la mémoire de sorte qu'un tableau, qui contient les adresses Internet, est affiché sur l'écran du téléviseur.

6. Dispositif selon l'une des revendications précédentes, **caractérisé en ce que** le dispositif présente une unité de télécommande, grâce à laquelle la mémorisation des données correspondant à une adresse Internet peut être déclenchée.

7. Dispositif selon l'une des revendications précédentes, **caractérisé en ce que** le dispositif présente une unité de télécommande, grâce à laquelle une adresse Internet affichée dans le tableau peut être sélectionnée, pour établir une connexion Internet.

8. Dispositif selon l'une des revendications précédentes, **caractérisé en ce que** l'unité de commande commande automatiquement le décodeur pour le décodage des données transmises dans le signal de télévision et correspondant aux adresses Internet selon l'accord du tuner du téléviseur sur un canal de télévision et initie la mémorisation de ces données dans la mémoire.

9. Dispositif selon l'une des revendications précédentes, **caractérisé en ce que** la mémoire est prévue pour la mémorisation d'autres données d'adresses Internet, qui peuvent être saisies au moyen de l'unité de télécommande du téléviseur ou d'un autre clavier.

10. Dispositif selon l'une des revendications précédentes, **caractérisé en ce que** l'unité de télécommande est prévue pour l'effacement de différentes adresses Internet du tableau et/ou pour le recours aux différentes adresses Internet dans le tableau.
